# EUROPEAN PATENT APPLICATION

(11) **EP 1 253 539 A2**
(43) Date of publication of application: **30.10.2002**
(21) Application number: 02251307.1
(22) Date of filing: 26.02.2002
(51) Int. Cl.: G06F 17/60

(54) **Brokering of information acquisition by devices in a wireless network**

(30) Priority: 27.04.2001 US 843647
(71) Applicant: Hewlett-Packard Company, A Delaware Corporation, Palo Alto, CA 94304 (US)
(72) Inventor: Pradhan, Salil, Santa Clara, CA 95051 (US); McDonnell, James Thomas Edward, Malmesbury, Wilts SN16 9NZ (GB); Waters, John Deryk, Combe Down, Bath BA2 5AN (GB); Macer, Peter J., Downend, Bristol BS16 5RH (GB)
(74) Representative: Lawrence, Richard Anthony

(57) **Abstract**

A mobile telephone (10), an advertiser, broadcasts an advertisement over a wireless short range piconet link to another mobile telephone (12), a consumer. The advertisement is broadcast with a predetermined set of classification tags and the consumer phone (12) has a filter set to accept only certain advertisements. When an advertisement of interest is received by the consumer phone (12) it requests further details automatically via the piconet link and the advertiser phone (10) provides then automatically via the piconet link. When the consumer wishes to reply to the advertisement they contact the advertiser phone (10), or an advertiser device, via a long range cellular link (16). An ASP advertisement broker (48) is interposed between the advertiser phone (10) and the consumer phone (12) for the long range telecommunication link.

## Description

This invention relates to information acquisition by devices in a wireless network. It especially, but not exclusively, relates to advertising over a wireless network, and is especially useful in short range networks, such as Bluetooth^{(™)}.

There has long been a desire to advertise goods or information on networks, usually to be exchanged for money. Spam e-mails are a fact of life, as are television advertisements and radio advertisements. Advertisements on video screens in buildings, whilst waiting in queues, and even in washrooms are known. There is so much advertising it is losing its effect on people, and people can switch off their interest as soon as they realise they are receiving an advertisement, and not pay any attention to it. This directs advertisers to use short advertisements. On the other hand, someone who is actually considering a purchase, the very person an advertiser would like to contact, may want more information to assist them.

Another problem with advertising to a mass market is that the supply of goods, or special deals, may have been exhausted by the time that a recipient of the advertisement replies to the advertisement. This can be annoying to the prospective customer. Furthermore, the usefulness of a special deal may be somewhat limited to certain customers (e.g. cheap flights from Chicago to New York may not be interesting to some one who lives in Los Angeles).

A further form of advertising is unsolicited cold-calling at a persons house, e.g. at the doorstep, or unsolicited telephone calls to try to persuade a person to buy something. This can be quite disturbing to the recipient of these personal unsolicited approaches.

There are, of course, many other forms of advertising.

It is an aim of at least one embodiment of the invention to at least try to ameliorate at least one of the aforesaid problems.

According to a first aspect the invention comprises a method of advertising comprising:
broadcasting a short range advertisement from an advertiser telecommunications device;
receiving the broadcast advertisement on a consumer telecommunications device; and
replying to the advertisement via a broker device interposed in the telecommunications link between the advertiser device and the consumer device.

The consumer device may be man portable, or may be hand-holdable.

The advertiser device may be man portable, or may be hand-holdable.

Thus the broker device is interposed between advertiser and consumer devices and can control what is communicated between them. It is therefore possible for the broker device to modify the message sent by the consumer device to the advertiser device, and/or to modify any follow-up message sent by the advertiser device, or a proxy or master advertising device, to the consumer device. The advertiser device may or may not include its own telecommunications address in its broadcast advertisement. It may include the telecommunications address of the broker device.

Short range is typically a few metres to something of the order of ten metres. Long distance can be of the order of a mile or miles, tens of miles, or hundreds of miles, or more.

The method may include broadcasting an advertisement including one or more advertisement classification codes which are compared with allowable advertisement codes in an advertisement screening operation by the consumer device. The consumer device may store or bring to the attention of user only those advertisements which are passed by the screening operation that it performs on the broadcast advertisements that it receives.

The consumer device may reply to an advertisement via short range, e.g. piconet, telecommunications, or via long range, e.g. cellular telephone, telecommunications. It may be preferred to reply to an advertisement via long range telecommunications because it may avoid the advertiser device knowing that the consumer device is close. The communication between the consumer device and the broker device, and/or the communication between the advertiser device and the broker device may be via long range telecommunications.

The method may comprise sending a first part of an advertisement via the short range telecommunications, and a second, preferably longer or larger, part of the advertisement via either long range or short range telecommunications. The first part may comprise substantially any advertisement classification codes. The second part may have 5, 10, 50, 100, or more, times as much data as the first part of the advertisement. The second part of the advertisement may be transmitted after the consumer device has screened the first part of the advertisement and communicated with the advertisement broker device or with the advertising device. The second part of the advertisement may be broadcast by the same advertiser device that broadcast the first part, or by a different advertiser telecommunications device.

Preferably the consumer telecommunications device is a portable, preferably a hand-portable, or pocketable, device. Preferably the advertiser device is a portable, preferably hand-portable, or pocketable, device (i.e. can be put in a normal pocket of normal clothing). One or both of the advertiser and consumer devices may comprise a mobile telephone or Personal Digital Assistant (PDA). The mobile device(s) is/are preferably portable electronic devices, which preferably have both piconet short range and long range telecommunication capabilities.

The advertisement, or first part or second part of the advertisement, may comprise an offer to sell or to buy; or it may comprise data or information that is not normally considered advertisements, for example documents or information. The method is especially useful to disseminate short-form abstracts of documents prior to a user deciding if they wish to call down longer versions/more information.

The same device may be both a consumer and advertiser device. It can be advertising one or more different advertisements and willing to consume incoming advertisements, possibly a user set profile of incoming advertisements. It may advertise and consume simultaneously, or substantially simultaneously.

It will be appreciated that by using a broker device interposed between the advertiser device and the consumer device, the consumer device may be pre-loaded with a telecoms address for the broker device and the advertisement transmitted by the advertiser device may not need to include a telecoms address for the broker device (or its own address). This can reduce the data transmitted in the advertisement a little. Furthermore, the consumer device does not have to have an automatic address-selection/entering capability for variable advertisement follow-up addresses (which would be the case if the consumer device replied directly to the advertiser device over the cellular network). Many, many, mobile telephones, or devices, may be pre-loaded with the same broker device address. A refinement is of course that there may be a plurality of different broker devices, each with their own telecoms address, and the advertisement could simply flag which of the pre-loaded addresses to use (instead of containing the full address). Much of the complexity of the processing is moved to the broker device, which allows simpler and cheaper advertiser and/or consumer devices.

According to a second aspect of the invention there may be provided a portable telecommunication device comprising a short range piconet receiver, a memory, and a control processor, the control processor being adapted in use to accept at least some advertisements that have been received by the receiver and to send a long range telecommunications reply address obtained from the advertisement to the memory, and the memory being arranged to store long range broker device telecommunications addresses for advertisements that have been accepted by the device, and in which the device is arranged so as to be able to contact a remote broker device via long range telecommunications without the user having to key in the broker device address.

The device may comprise a long range telecommunications emitter.

The mobile telecommunications device may further comprise a reply trigger adapted in use to cause the controller to use an address from the memory to send a long-range telecommunications reply to a received message to the address associated with a relevant incoming message, and in which the device has both piconet and long range telecommunications emitters and receivers and the controller is adapted, in use, to assess the telecommunications address to determine whether the reply address is a short range piconet address or a long range telecommunications address and to cause the reply to be emitted by the appropriate long or short range emitter of the device.

The controller of the device may be adapted to assess a received message to determine whether the message is of a category of interest, and if so request further details or a fuller message via its piconet channel, and in which the device is adapted to receive requested further details of a fuller message via its piconet channel; and in which the device is adapted to contact a reply address via its long distance telecommunications channel.

Alternatively, the device may have an advertisement store adapted to store the advertisement and which includes an advertisement reply, broker device, address store adapted to receiver a telecommunications address for replying to the advertisement.

According to a third aspect of the invention, there is provided a server adapted to act as an advertisement broker device adapted to receive one of (i) an advertisement message or (ii) a reply message to an advertisement and to forward the received message to a remote telecommunications device; the server being adapted to modify the received message so as to ensure, at least initially, that no telecommunications address of an advertiser or replier to an advertisement is passed with the message that is transmitted by the server.

The server may be adapted to store the direct telecommunications address of the provider of the message and to recall that address and forward it to a remote telecommunications device if a release signal has been received by the server.

According to a forth aspect of the invention, there is provided a network comprising an advertiser device comprising a hybrid mobile telephone, or other telecommunications device, having both a short range transmitter and receiver, and also a long range telecommunications transmitter and receiver, a memory, and a control processor, the memory containing an advertisement;
a consumer device comprising a hybrid mobile telephone, or other telecommunications device, having both a short range, piconet, transmitter and receiver, and also a long range telecommunications transmitter and receiver, a memory and a control processor, the memory or the processor having an advertisement reciever which, in use, is capable of receiving and storing an advertisment;
and an advertisement broker device contactable via wireless telecommunications by both the advertiser and consumer devices, the broker device being adapted to pass advertiser details to the consumer device, consumer details to the advertiser device, or both.

The server may be adapted to pass advertiser details to the consumer device, and/or consumer details to the advertiser device, provided that a details-release trigger has been triggered.

The remote advertisement broker device may be contactable via the long range emitter of the consumer device, and may be capable of contacting the advertiser device by the long range receiver of the advertiser device.

The broker device may be connectable with the advertiser device and the consumer device via long range wireless telecommunications.

It will be appreciated that whilst it is envisaged that "advertisement" will usually be something offered for monetary recompense, it may not always be so. For example, it is possible that the advertisement may comprise a circulation of the titles or abstracts of recently published papers or internal news, and the "reply to advertisement" may be a request for the full copy of the documents, with or without payment; the advertisement may comprise a request for volunteers to perform a task, and the reply may be volunteers agreeing to perform the task and enquiring more about what is expected of them.

The invention may be seen as a way of telecommunication devices acquiring information.

Embodiments of the invention will now be described by way of example only, with reference to the accompanying drawings, of which:-
**Figure 1** shows schematically two mobile telephones in accordance with the invention;
**Figure 2** schematically illustrates the invention;
**Figure 3** is a flow diagram illustrating one way of implementing an aspect of the invention;
**Figure 4** is a flow diagram illustrating one way of implementing the playback of a captured advertisement;
**Figure 5** schematically illustrates one way that an advertising person can create their advertisement;
**Figure 6** schematically illustrates one way that a person can configure their mobile telephone to screen out unwanted advertisements;
**Figure 7** schematically shows a building with a point of high human traffic flow provided with an advertising station;
**Figure 8** shows the visual display of a mobile telephone with some advertisements accepted on it; and
**Figure 9** schematically shows an advertisement.

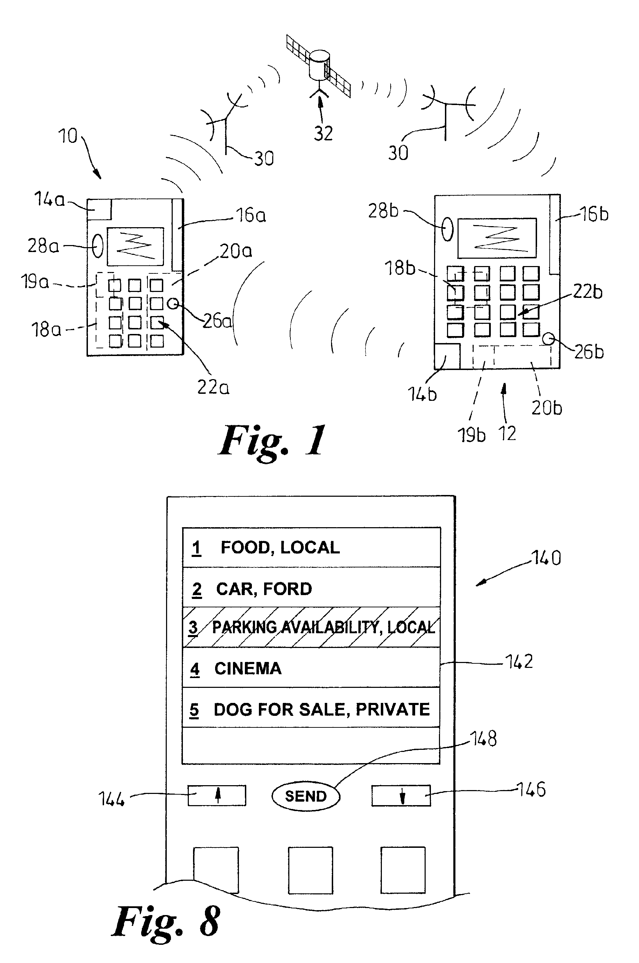

Figure 1 shows a first mobile telephone 10, a consumer's telephone, and a second mobile telephone 12, an advertiser's telephone. Both telephones have both short-range (of the order of 10 metres or so) wideband wireless telecommunications capabilities, e.g. Bluetooth or IEEE812.11, provided by short range telecommunication antenna 14a and 14b, and they both also have long range cellular telecommunications capabilities provided by long range antenna 16a and 16b. Both telephones also have a control processor 18a or 18b, memory data storage 19a and 19b, a battery 20a or 20b, a keypad or other data input means (e.g. voice recognition) 22a or 22b, a display screen 24a or 24b, a microphone 26a or 26b, and a speaker 28a or 28b.

The two telephones 10 and 12 can communicate in a piconet via their short range telecommunication channels when they are close enough together, and can communicate via their long range antenna 16a and 16b, (and via land emitters and receivers 30, and via satellite 32) at much greater distances apart (miles, hundreds of miles, or thousands of miles apart).

Such telephones may be termed "dual mode" or "hybrid" telephones. It will be appreciated that by "telephone" is meant primarily what is conventionally thought of as being a mobile telephone, but also "mobile telecommunications device", such as a Personal Digital Assistant (PDA), laptop or palmtop computers, or even devices which have other functions, possibly even other primary functions, in addition to having short range and long range telecommunications abilities.

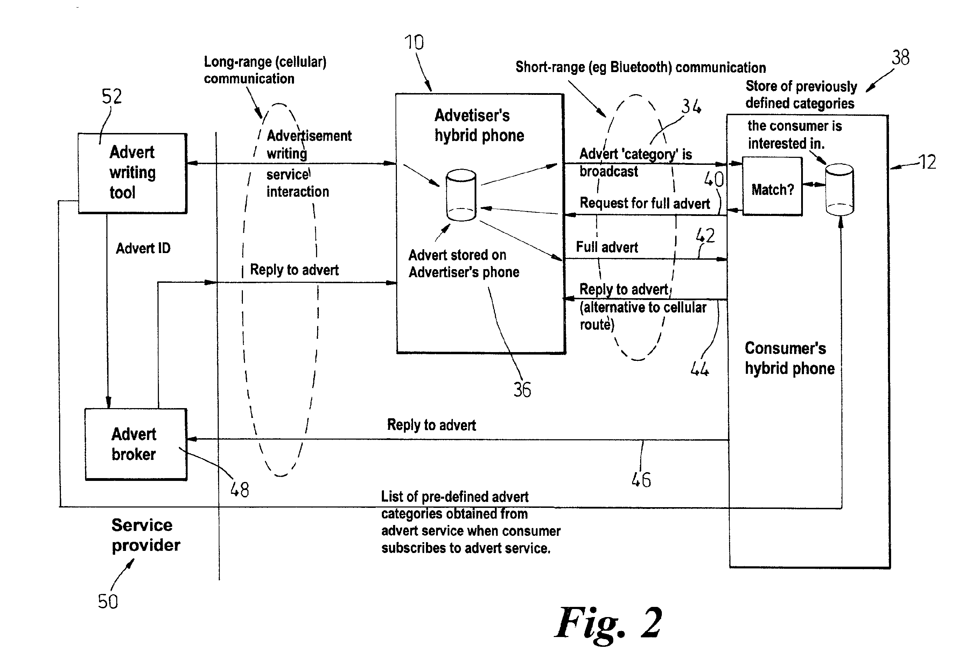

In the example of Figure 1 and as illustrated in Figure 2, telephone 10 is the advertiser's telephone and it has within it an electronic advertisement advertising something for sale (for the sake of example). Phone 10 has its controller 18a and memory 19a arranged so that it broadcasts, referred 34 in Figure 2, periodically, say every 30 seconds, a short-form advertisement, or category of advertisement, using its short range telecommunications antenna 14a. The advertisement is stored in the advertiser telephone memory 19a, as mentioned in Figure 2 at reference 36, and is recalled to an emitter circuit of the telephone periodically for broadcast.

The consumer's hybrid telephone, 12, has an advertisement filter 38 and when it receives the broadcast advertisement 34 it compares its categories or profile permissible parameters with those of its filter 38, and if there is a match to a suitable degree the consumer's telephone 12 sounds or vibrates, or otherwise alerts the consumer to the presence of an advertisement of interest. In an alternative embodiment it does not notify the consumer at this stage.

After the consumer's telephone 12 has determined that the broadcast advertisement is of interest it automatically sends out a signal via its short range telecommunications antenna 146 requesting a full advertisement from the telephone 10 (referenced 40 in Figure 2). Upon receipt of the request for the full advertisement, telephone 10 transmits its full advertisement, again via its short range telecommunications (referenced 42). If the advertiser telephone 10 is out of piconet range (which is unlikely since the "full advertisement request" is likely to be issued within a second of receipt of the short-form advertisement), or no piconet transmitted full advertisement is received by the consumer phone 12, it may contact the advertiser via its long range telecomms, if the telecomms address of the advertiser is known.

The consumer's telephone 12 receives the full advertisement and stores it in its memory 19b. At this stage the device 12 notifies the consumer that it has an advertisement of interest (if it has not already done so). Alternatively, the telephone 12 may be configured to alert the consumer only at predetermined times (e.g. the end of the work day, or at lunch time), or at predetermined location (eg. at a consumer's home, at their office, or perhaps anywhere else but not whilst they are at certain locations (e.g. not in their car when they might be driving, and not in a main meeting room, not in a cinema etc.)

After the consumer has experienced the advertisement (it could be audio, visual, or both) they may wish to reply to the advertisement. They can do this by triggering an automatic reply dial. The advertisement category, short-form advertisement, that has already been received by the consumer's telephone 12, provided the telephone 12 with the telecommunications address of either the full advertisement, the reply address for the advertisement, or both. Alternatively the reply address may be communicated to the phone 12 by the full advertisement 42. However, the phone 12 becomes aware of the reply address, it sends a reply, referenced 44 and/or 4b in Figure 2.

The phone 12 initially tries to reply to device 10 via the short range telecomms 14a and 14b. If that is successful then the two phones 10 and 12 can continue to communicate over, for example, Bluetooth, or the like.

If no reply connection can be established over the local piconet, the device 12 uses its long range cellular telecommunications ability, via antenna 16b, to reply to the advertisement. This is referenced 46 in Figure 2. In Figure 2 the reply 46 is addressed to an advertisement broker 48 which forwards the reply to the advertiser's telephone 10, possibly after removing data that would enable the device 10 to contact the device 12 directly, e.g. the address of device 10. It may be desirable to do this if the advertiser who is using phone 10 has to pay the advertisement broker to be put in direct contact with the interested customer.

The amount of data, and the content of the data, in the reply 44 or 46 may be constrained by the advertising service provider referenced 50.

When the advertiser agrees to pay the advertisement broker (if this is necessary) the advertisement broker provides the direct telecomms address of the consumer to the advertiser, or of the advertiser to the consumer, or both of their addresses to each other. It will be appreciated that the arrangement may be that the interested consumer may pay/agree to pay instead of or as well as the advertiser before they are put properly directly in touch with each other.

Figure 2 also indicates that the service provider 50 makes available to the advertiser, via their telephone 10, an advertisement writing tool 52. This is used to ensure conformity and standardisation of short-form advertisements 34, or at least of their searchable/filterable categories, so that the filter 38 of the consumer's telephone can find those advertisements that are classed as being in the sought categories and screen out other advertisements.

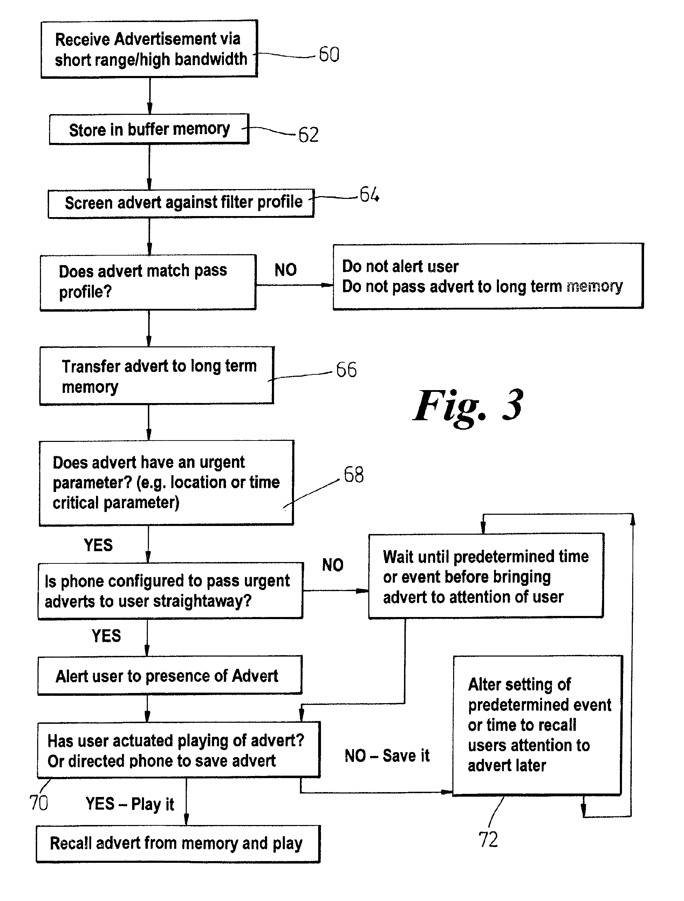

Figure 3 shows a flow chart process for another embodiment of the invention. In this example the consumer's telephone 12 receives at 60 an advertisement via its short range/high bandwidth telecomms system. The advertisement, which may simply be the classification categories into which the advertisement falls, or may also include text, audio, or video, is stored in buffer memory temporarily, step 62.

The advertisement is screened, at step 64, against the pre-existing filter profile in the phone 12. If the profile of the advertisement does not match that of the filter to an acceptable degree the consumer is not alerted to the presence of the advertisement, and the advertisement in the buffer memory can be overwritten by future advertisement received by the device 12, or may even be positively deleted. If the advertisement is passed by the filter it is transferred to longer term memory of the phone 12, see step 66.

This embodiment has the feature of being able to alert a consumer of an advertisement very promptly, if appropriate to do so. This may be important if the advertisement has short range (geographical range) applicability, for example a "30% reduction in set meal cost today only" advertisement broadcast by a restaurant, or "upload newspaper now - $1" broadcast by an electronic news-stand. These are situations where the offer is either of immediate interest to the consumer or not, and there is little point in the consumer discovering some hours later that they could have had a special lunch deal hours ago, but have missed it now.

As illustrated at 68 in Figure 3, one of the advertisement parameters is "urgency", whether that be time expiry of relevancy of advertisement, or physical location - expiry of relevance of advertisement. The phone 10 may be configured to alert a user straight-away if an advertisement in a non-screened out category is received which has an urgency flag associated with it.

The user can decide whether to play the advertisement now, or save it until later, referenced 70. If the user decides to ignore the advertisement for now they can decide not to play it, and their phone 10 saves it with an automatic recall function 72 where the advertisement is re-presented on the phone to the user for playing at either a predetermined time later (e.g. 2 hours later, provided replay time is between 8.00am and 10.00pm), or a set event (e.g. 5 minutes after detecting the user's home base beacon at their house, or at their office, or in their car).

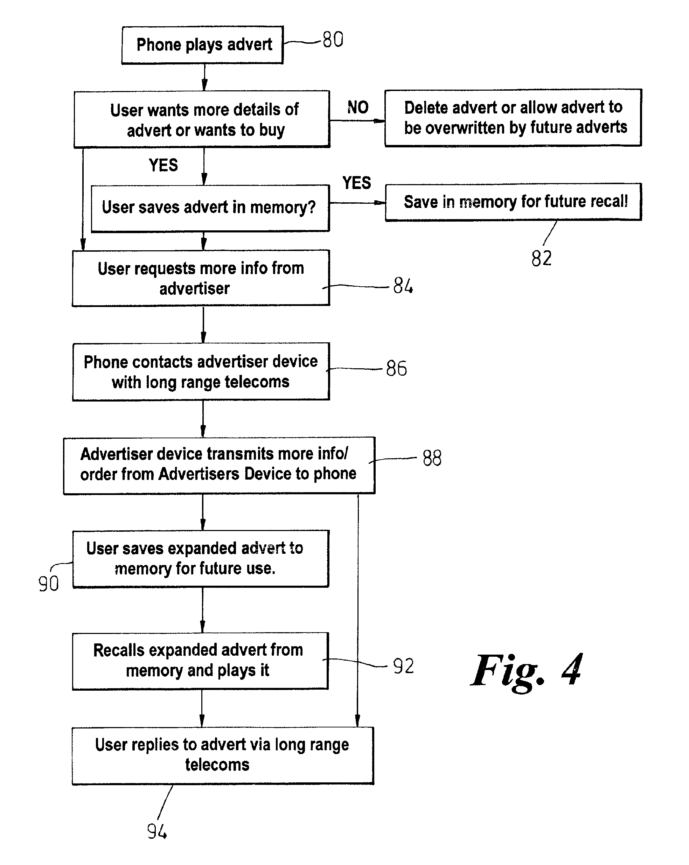

Figure 4 illustrates the configuration of one embodiment of the invention, after a consumer has decided to play the advertisement (reference 80). The user may decide to save an advertisement they had played back to them to memory (step 82) or they may leave the advertisement in temporary memory and deal with it/enquire further with the advertisement temporarily stored. Either way, there comes a time when the user would like to reply to the advertisement, or to request more details, step 84. The phone 12 contacts an advertiser device via its long distance telecomms, step 86. This advertiser device could be another mobile device, or the device which transmitted the advertisement (which very well may be a mobile device) or it could be a separate, different, device, e.g. an Application Service Provider Server.

The advertiser device transmits more information to the consumer device 10 via the long distance, e.g. cellular, network. The device 10 saves the expanded advertisement, with the extra information to memory, step 90 (possibly temporary memory, or possibly long term memory). The user can reply to the advertisement via long range telecomms 94.

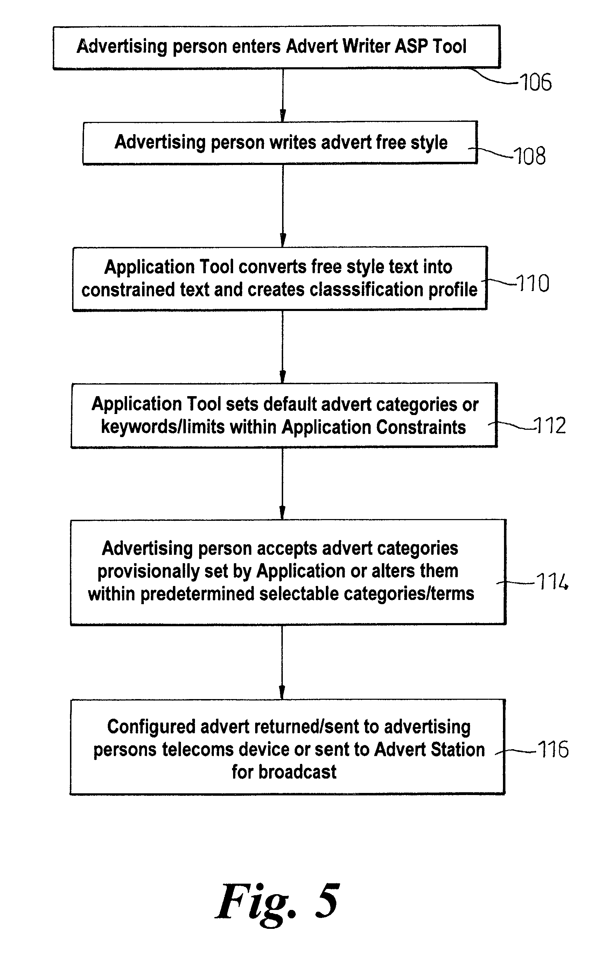

Figure 5 shows one possible implementation of how an advertiser may create an advertisement on their advertising device. There is an Application Service Provider (ASP) who can be contacted by the advertising device via long range telecomms (e.g. internet or cellular, referenced 106). The advertising person types in their advertisement using free text, step 108, typically via their mobile telephone or PDA. The ASP has an ASP Advertisement Writer Tool which takes the free text advertisement and, using a set of algorithms and rules, coverts it into a constrained format, step 110, where only selected predetermined words can be used in the advertisement, and creates an advertisement classification profile which accompanies the constrained text. The constrained text advertisement and the automatically generated advertisement category profile are presented to the advertiser for review, step 112, possibly along with selected other categories that the user may care to add to the automatically generated categories, or exchange for them. The user may be able to delete or change the automatically generated categories: see step 114. The completed advertisement is then transmitted to an advertising station, see step 116. This advertising station may be the advertiser's device (e.g. phone), or it could be a separate advertiser station, e.g. a site where a lot of people pass by.

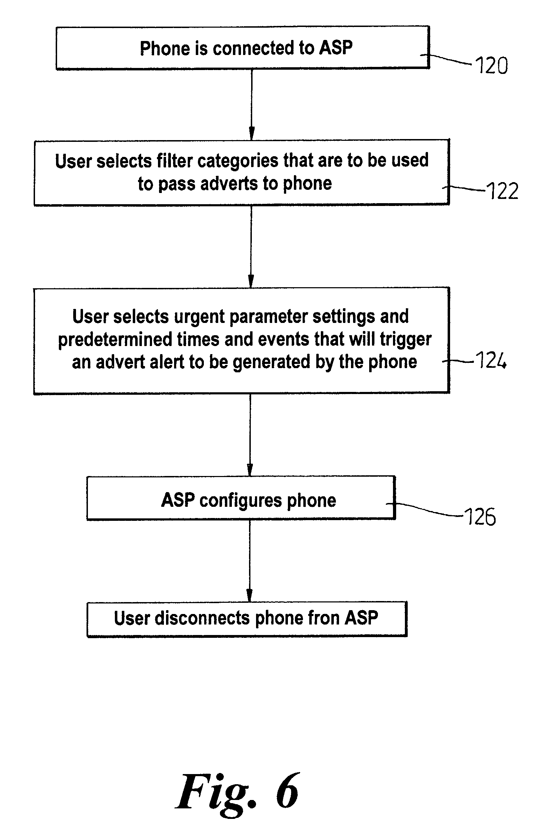

Figure 6 shows the setting of an advertisement filter for a mobile phone. The telephone 12 (consumer) telephones the ASP, step 120, and the consumer is presented with a display of possible filter categories, for example: holidays, sport, cars, under $100, under $50, $1000-$5000, clothes, male/female, age target, geographical vicinity of advertiser to be within specific distance of consumer phone (GPS/position sensors may be provided, or just short range capabilities may set the allowable geographic spectrum), food, financial, news, music etc.

The user selects, in step 122, which categories are to be excluded and which are to be included. In this example the ASP gives weightings to other non-specifically indicated categories, dependant upon what has been screened positively in and out of the filter profile, and may pass to the consumer non-specifically screened in, or screened out, advertisements that have a high enough weighting/point score. In this example the user is required specifically to select whether to allow urgency flags to trigger an immediate advertisement alert (if the advertisement if the advertisement passes the rest of the filter) or not, step 124.

When the user has set their filter profile on the ASP it is downloaded from the ASP to the phone, step 126, and the user disconnects from the ASP.

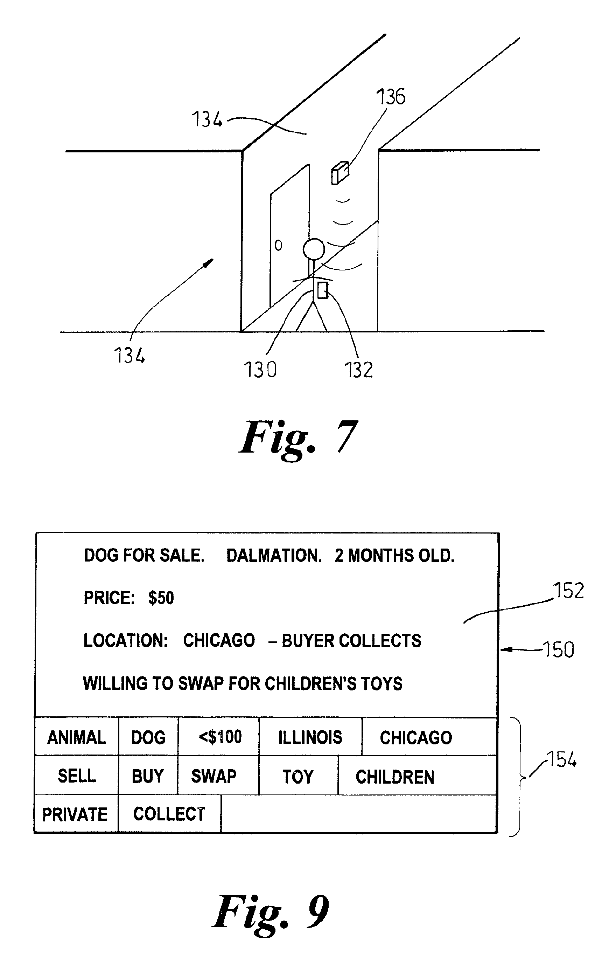

Figure 7 shows one possibility. A user 130 and their mobile phone 132 are in a shopping mall 134 and as they pass a bookstore 134 an advertiser device 136 broadcasts an advertisement on a short range wideband emitter to the mobile phone 132. The advertisement offers a special deal on certain books, e.g. the top 10 best sellers, if the books are bought in the next few hours or days.

The advertiser device 136 (or a similar device associated with another organisation, not necessarily the example given) may emit electronic vouchers or coupons, redeemable against certain goods or services, possibly with a time expiry date.

It will be appreciated that a static advertiser device can reach a lot of people if it is in a busy place such as a shopping mall, turnstile or doorway of a building, or a transport station, such as a train or subway station. A mobile advertiser station, e.g. in a train or taxi, or even carried by a person (e.g. their mobile phone) may be in piconet contact with a great many other devices over a period of time.

Some advertisers may pay some people or organisations to carry their advertisements. For example a company may agree to contribute to a mobile telephone bill if the mobile telephone carries their advertisement and broadcasts it. An amount per enquiry originating from their telephone, or a "rental" fee payable to the owner of the device may be envisaged.

The advertisement could be on offer to sell or supply, or a request to buy or receive.

It will also be appreciated that it may be preferred in some situations to ensure that the reply to an advertisement is transmitted via long range telecommunications, or at least not let the advertiser know that the reply has come via short range telecomms. It can be awkward for a potential customer if a seller/advertiser knows that there is such a potential customer (i.e. someone whose telecomms device has replied to their advertisement) within a few metres of them - in a piconet with them.

The advertisement may take the form of an auction, or reverse auction. An item may be open for bids for a fixed time period and then sold to the highest bidder (or in the reverse auction scenario, the lowest bidder).

A benefit of using a wideband link for the short-form advertisement is that it makes the transmission time of a short form advertisement short, for example less than one second is envisaged. The transmission of the full advertisement and associated details, over Bluetooth or other short range telecomms, might be of the order of a few seconds. The data rate envisaged for the short range telecomms is of the order of 500 kbits/second or better. Perhaps ten times that, or better can be achieved. Video clips may be transmitted.

The short range wideband link may have a data rate that is perhaps 10 to 1000 times as great as that of the long distance telecomms link. In an alternative embodiment the data rates may vary by a factor of <2, 2, 5, 10, 50, 100, 500, 1000, or more, or by an amount defined by a range between any of those values.

Although primarily described in relation to advertisements, the invention is potentially applicable to other situations where a first tranche of data is provided to a user who may or may not want a further tranche of data, for example abstracts of documents may be distributed via short range piconet links, with users able to obtain fuller text via long range telecomms (and there may or may not be a cost payable to the host/ASP/database for the fuller text).

The fact that the piconet advertisements are necessarily originating from a local source may be attractive. The invention may be thought of as the broadcasting and filtering of local advertisements over a piconet, with the probable provision of a writing tool (e.g. WAP based) and the possible provision of a broker for responses to advertisements that come back via the cellular network or piconet.

Figure 8 shows a mobile telephone 140 having an LCD display 142. There are five advertisements currently in the memory of the phone 140, and being displayed on display 142. These advertisements are short-form, category-only advertisements. The phone 142 is still in piconet contact with the advertiser device(s) that is/are transmitting the short-form advertisements. The user selects which advertisement to enquire about by using the up/down controls 144, 146 and, in this example chooses advertisement number 3, Parking Availability. Local. In this example those advertisements which carry a "local" flag/characteristic have "local" next to them on the display 142 so that the user can tell they are local.

The user presses the "send" button 148 (or "yes" button) when advertisement 3 is selected and the phone 140 transmits a piconet signal broadcast generally. The piconet advertiser device that is advertising parking space then sends back details of where the parking space is, and how much it costs. In this example the advertiser device does not make a charge for fleshing out the short-form advertisement. The user can now drive to the car parking space knowing that it is close. Whilst each piconet device has a range of the order of a few metres to tens of metres, a piconet in a city, for example, could extend hundreds of metres due to piconet devices passing on messages to other piconet devices in the piconet. Thus the car parking space can be much further away from the phone 140, even if the advertising device is in the car park (which it need not be).

Item 5 on the display 142 illustrates another characteristic label that may be displayed with the short form advertisement: whether the advertisement is from a commercial organisation or a private individual (i.e. word "PRIVATE" indicates private individual's advertisement).

Figure 9 shows an advertisement 150 having text 152 to be displayed on the screen of a consumer's telephone, and classification codes 154 that are not displayed, but that are used by the advertisement filter of the consumer's phone to determine whether the consumer wishes to know about the advertisement. It has both "SELL" and "BUY" codes since the advertiser is both looking to part with a dog and to acquire toys.

The phone 140 presents the advertisement categories 1 to 5 initially as text only. The list of advertisements on its display may be a limited number of advertisements, limited to the best matches to the filter. The list may be a rolling list which is scrollable through advertisements received, either manually scrollable or automatically scrolling. The phone may have no filter.

To return to an overview of embodiments of the invention: It will be apparent that the advertisement of short range high bandwidth wireless technologies such as Bluetooth will give rise to a new class of hybrid mobile phones that combine both a long range cellular link with a separate short range wireless link in the same device. With such hybrid phones, it will be possible to communicate via the cellular link, passing information received directly on through the short range link to nearby devices, and vice-versa. The present invention takes advantage of this to provide an advertisement service that uses these hybrid phones to broadcast advertisements, receive advertisements and respond to these advertisements.

The advertiser preferably broadcasts only a minimal advertisement to those in the vicinity, typically the advertisement category. If there is a match of interest in the consumer's phone, the consumer's phone then requests the full advertisement details which are quickly transferred over the short range link. This "advertisement transaction" will happen very quickly, and because of the short range communication that is used, by the time the consumer has had time to consider the advertisement the advertiser may be out of range. Thus, there is proposed a response route via the long range cellular network. The consumer indicates on his phone his desire to purchase the item, and signals this back via the cellular network. The advertisement broker matches the ID of the advertisement with that of the advertiser and passes on a message to the advertiser informing him of the consumer's interest.

The wireless nature of the short and long range telecomms envisaged is attractive.

The service provider, or advertising device could provide an auction, or other value-added services.

Each mobile phone or PDA could be viewed as a walking billboard. It is of course possible to configure a phone to respond to accept no advertisements.

It will be appreciated that in the prior art a user who wants to have details of a lot of documents/data (e.g. advertisements) from a remote site has been able to transmit the database to themselves and to discard what they do not want. This is very wasteful in telecommunication capacity and requires a great deal of bandwidth, and also a lot of memory at the receiving device. The present invention reduces the amount of data that is carried via telecommunications, and that is stored (albeit temporarily), in comparison with transferring everything and then discarding at the user's end.

An alternative known system is for a user to type in a search strategy to a computer to instruct a remote database host to perform a search for the data of interest and to transmit to the user via telecommunications just the result of the database search. However, this does not lend itself very well to the situation such as advertising where a user does not know that there is data that they might like to see (because they would not know to type in an appropriate search command). Some embodiments of the present invention positively, and proactively, draws to the attention of a user opportunities to discover more about a data record.

Some embodiments of the invention transmit relatively large volumes of data over high bandwidth, cheap (or even free-to-air) short range wireless transmissions. This avoids congesting land lines, or long range cellular networks. These embodiments may restrict the use of the long range wireless telecommunications, which typically are more expensive in transmission costs and are often more congested, to smaller volumes of data, and/or to data that is known to be of interest (rather than speculative unsolicited data). This can improve the overall availability of the long distance e.g. cellular network, the connection rate for successful connections, and can reduce the rate for connections being unexpectedly terminated.

By having the advertisement writer and filter creator at a remote site, the mobile consumer and advertiser devices can potentially have simpler microprocessors/software stored on them, and require less processing power and memory than they otherwise would, since the software and databases used to create the advertisements and filters need not be stored in them, or be operable in their processor chips.

By having advertisements, or other data, broadcast at low power over a short range piconet by an advertiser device (e.g. mobile telephone), it is possible to avoid using high power, longer distance, transmitters, and the power density of radiation in the environment may be kept down (in comparison with having a big long range transmitter). This may help reduce electromagnetic "pollution" of the electromagnetic environment, and may reduce the likelihood of signals interfering with other things undesirably.

## Claims

1. A method of advertising comprising:
broadcasting a short range advertisement (34) from an advertiser telecommunications device (10; 136);
receiving the broadcast advertisement (60) on a consumer telecommunications device (12; 136; 140); and
replying to the advertisement via a broker device (48) interposed in the telecommunications link between the advertiser device (10; 136) and the consumer device (12; 132; 140).

2. A method according to claim 1 in which the consumer telecommunications device (12; 132; 140) is a hand-holdable portable and pocketable device.

3. A method according to claim 1 or claim 2 in which the advertiser device (10; 136) is a hand-holdable portable and pocketable device.

4. A method according to any preceding claim in which the broker device (48) modifies the message sent by the consumer device (12; 132; 140) to the advertiser device (10; 136), or modifies any follow-up message sent by the advertiser device (10; 136), or a proxy or master advertising device, to the consumer device (12; 132; 140).

5. A method according to any preceding claim in which the advertiser device (10; 136) does not include its own telecommunications address in its broadcast advertisement, but includes the telecommunications address of the broker device (48) in its advertisement.

6. A method according to any preceding claim in which the advertisement includes one or more advertisement classification codes (154) which are compared with allowable advertisement codes in an advertisement screening operation (64) by the consumer device (12; 132; 140).

7. A method according to any preceding claim in which the consumer device (12; 132; 140) replies to an advertisement via long range telecommunications (46).

8. A method according to any preceding claim comprising sending a first part of an advertisement via the short range telecommunications (34), and a second, longer or larger part of the advertisement via short range telecommunications (42), the second part of the advertisement being transmitted after the consumer device (12; 132; 140) has screened the first part of the advertisement and communicated with the advertisement broker device (48) or with the advertising device (10; 136).

9. A method according to any preceding claim comprising using a mobile telephone, personal digital assistant, or other small portable electronic devices for both the advertiser device (10, 136) and the consumer device (12, 132, 140), the devices both having both piconet short range and long range telecommunication capabilities.

10. A portable telecommunications device (12; 132; 140, 10; 136) comprising a short range piconet receiver (14a, 14b), a memory (19a, 19b), and a control processor (18a, 18b), the control processor (18a,18b) being adapted in use to accept at least some advertisements that have been received by the receiver and to send a long range telecommunications reply address obtained from the advertisement to the memory (19a, 19b), and the memory (19a, 19b) being arranged to store long range broker device telecommunications addresses for advertisements that have been accepted by the device, and in which the device is arranged so as to be able to contact a remote broker device (48) via long range telecommunications without the user having to key in the broker device address.

11. A device according to claim 10 comprising a long range telecommunications emitter (16a, 16b).

12. A mobile telecommunications device according to claim 11 further comprising a reply trigger adapted in use to cause the controller (18a, 18b) to use an address from the memory to send a long-range telecommunications reply (46) to a received message to the address associated with a relevant incoming message, and in which the device has both piconet and long range telecommunications emitters and receivers (14a, 14b, 16a, 16b) and the controller (18a, 18b) is adapted, in use, to assess the telecommunications address to determine whether the reply address is a short range piconet address or a long range telecommunications address and to cause the reply to be emitted by the appropriate long or short range emitter of the device.

13. A device according to claim 12 in which the controller (18a, 18b) of the device is adapted to assess a received message to determine whether the message is of a category of interest (64), and if so request further details or a fuller message via its piconet channel (60), and in which the device is adapted to receive requested further details of a fuller message via its piconet channel; and in which the device is adapted to contact a reply address via its long distance telecommunications channel.

14. A server adapted to act as an advertisement broker device (48) adapted to receive one of (i) an advertisement message or (ii) a reply message to an advertisement and to forward the received message to a remote telecommunications device; the server being adapted to modify the received message so as to ensure, at least initially, that no telecommunications address of an advertiser or replier to an advertisement is passed with the message that is transmitted by the server.

15. A server according to claim 14 which is adapted to store the direct telecommunications address of the provider of the message and to recall that address and forward it to a remote telecommunications device if a release signal has been received by the server.

16. A network comprising an advertiser device (10; 136) comprising a hybrid mobile telephone, or other telecommunications device, having both a short range transmitter and receiver (14a), and also a long range telecommunications transmitter and receiver (16a), a memory (19a), and a control processor (18a), the memory (19a) containing an advertisement;
a consumer device (12; 132; 140) comprising a hybrid mobile telephone, or other telecommunications device, having both a short range, piconet, transmitter and receiver (14b), and also a long range telecommunications transmitter and receiver (16b), a memory (19b) and a control processor (18b), the memory or the processor (19b) having an advertisement receiver which, in use, is capable of receiving and storing an advertisement;
and an advertisement broker device (48) contactable via wireless telecommunications by both the advertiser (10; 136) and consumer devices (12; 132; 140), the broker device (48) being adapted to pass advertiser details to the consumer device (12; 132; 140), consumer details to the advertiser device (10; 136), or both.
